# EUROPEAN PATENT SPECIFICATION

(11) **EP 1 875 206 B1**
(45) Date of publication and mention of the grant of the patent: **20.10.2010**
(21) Application number: 06733103.3
(22) Date of filing: 03.04.2006
(51) Int. Cl.: G01N 21/35, G01J 3/26, G02B 5/28

(54) **ADJUSTABLE INTERFERENCE FILTER**
EINSTELLBARER INTERFERENZFILTER
FILTRE D INTERFÉRENCE RÉGLABLE

(30) Priority: 15.04.2005 NO 20051851
(43) Date of publication of application: 09.01.2008
(73) Proprietor: Sinvent AS, 7465 Trondheim (NO)
(72) Inventor: JOHANSEN, Ib-Rune, N-0882 Oslo (NO); FERBER, Alain, N-1344 Haslum (NO); SAGBERG, Håkon, NO-0481 Oslo (NO)
(74) Representative: Thrane, Dag
(86) International application number: PCT/NO2006/000124
(87) International publication number: WO 2006/110042

(56) References cited:
- EP-A- 1 126 256
- US-A- 5 920 391
- US-A1- 2003 058 520
- US-A1- 2004 080 832
- US-A1- 2005 094 699
- ZÖCHBAUER M: "Fabry-Perot correlation photometer for gas analysis" TECHNISCHES MESSEN, vol. 61, no. 5, May 1994 (1994-05), pages 195-203, XP009069567 cited in the application
- HOHLFELD D ET AL: "A thermally tunable, silicon-based optical filter" SENSORS AND ACTUATORS A, ELSEVIER SEQUOIA S.A., LAUSANNE, CH, vol. 103, no. 1-2, 15 January 2003 (2003-01-15), pages 93-99, XP004400386 ISSN: 0924-4247

## Description

This invention relates to an adjustable interference filter, especially for use in gas detection with infrared light within a chosen range.

Most gases absorb infrared light with photon energies corresponding to the vibrational transitions of the gas molecule. When measuring gas concentrations with infrared light it is usual to perform two measurements of the light transmitted through the gas: One measurement being influenced (reduced) by gas absorption and one reference measurement which is not affected by the gas. This measuring method is sometimes referred to as non-dispersive infrared (NDIR).

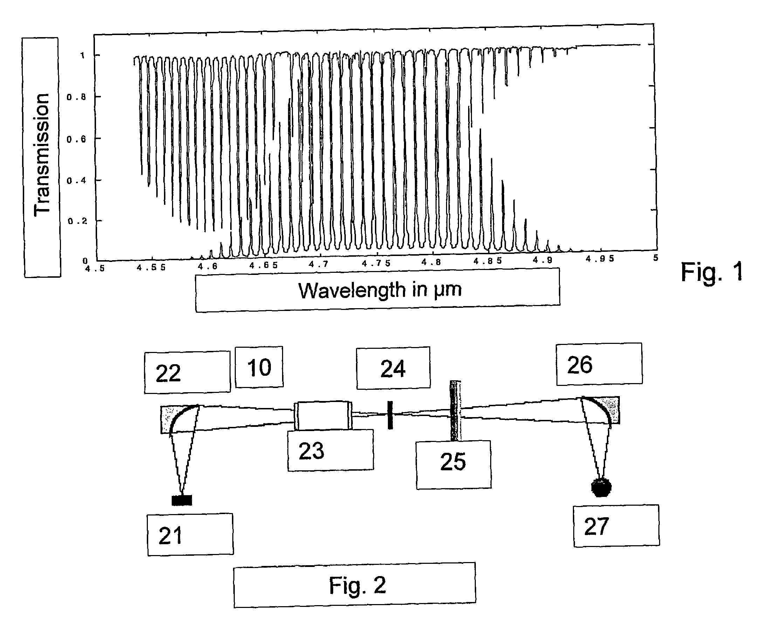

As illustrated in figure 1, which shows the transmission as a function of the wavelength in the range of 4.5-5.0µm, the infrared spectrum of carbon monoxide (CO) has an almost periodic line pattern. Several gases, including methane (CH₄), have similar absorption lines. The distance between the CO lines increase with increasing wavelength, but is essentially constant within a small interval of wavelengths. In order to measure the concentration of CO one may use an assembly as illustrated in figure 2. Light from an infrared source 21 is sent via a focusing mirror 22 through a gas cell 23 and further through a modulated filter 24, e.g. a Fabry -Perot filter, and a fixed band pass filter 25, and further through a new focusing mirror 26 to a detector 27. In this line up the function of the modulated filter is to shift between two configurations or settings. In one setting it transmits light in the spectral range where the CO transmits light (correlation setting) and in the other setting the it transmits light in the range where the CO absorbs light (anti-correlation setting). In this way it is possible to shift continuously between measurements using the different settings. The difference between the two settings will be zero when CO is not present in the gas cell, and will increase with increasing concentration of CO.

By using a filter being adapted to single lines in the gas spectrum several advantages may be obtained:
1) A given gas concentration gives a larger relative change in the measured signal, compared to when a band pass filter is used.
2) If other gases are present in the area which absorb within the same wavelength range these will have minimal influence on the measurements, as one reduces the sensitivity for gases in the same range but with different lines.
3) Changes in the source temperature and other disturbances will also affect both measurements to the same degree.

For this to work everything except the position of the filter lines must be kept constant. This may be obtained by letting the light follow as similar paths as possible. Preferably everything affecting the measurements should have the same influence on them. In addition to other gases influences may be temperature gradients, dirt deposited on optical surfaces, drift in amplifier circuits, mechanical stability etc.

It is difficult to make a filter which fits directly with the CO lines. A good approximation is an interference filter having two parallel optical surfaces with a distance *d* between the surfaces, and a refractive index *n* for the medium between the surfaces. The transmission through the filter is then a periodic function of the wave number ν = 1/λ, where λ is the wavelength. The period is 1/2*nd*, where *n* is the refractive index. Now the distance *d*, may be chosen so that the period corresponds with the CO lines in one range in the spectrum. When the optical wavelength *s* = *nd* is changed with one fourth of the wavelength: : *s*±(Δs) = *s* ± λ/4, the required modulation of the filter is obtained. With a constant refractive index this will correspond to a change in thickness *d*±(Δ*d*) = *d* ± *λ*/*4n*. When the refractive index is 1, Δ*d* will be approximately 2.3 µm.

The transmission through an interference filter in anti correlation mode, adapted to the CO spectrum, is illustrated in figure 1, where the upper line shows the CO spectrum and the lower line shows the transmission spectrum of the filter, both as functions of the wavelength, which is in the range of 4.5 to 5.0µm.

Out from the centre wavelength a gradually increasing deviation will occur between the filter lines and the gas lines, as shown in figure 1. By adding a band pass filter one can delimit the range which is used.

If the interference filter is to consist of two parallel mirrors with an adjustable distance, the choice in optical materials between the mirrors is very limited: Air, other gases or possibly an elastic, transparent material. The optical material in the interference filter dictates how large angular spread one may have in the incoming light. When the angle increases the effective optical wavelength will decrease for the interfering light, and a spread in the incident angles will result in a smearing of the transmission spectrum. A high refractive index will give a low maximum refracted angle inside the filter. The maximum allowed angle will decide the etendue of the filter. Etendue is the product of area and solid angle of the light bundle, a measure of how much light it is possible to get through the system when the radiation source has unlimited extension. It can be shown that for a given spectral resolution the etendue is proportional to the square of the refractive index. Thus one may get 10 times more light if e.g. silicon is used (*n*=3.4) instead of air in the resonator.

The challenge is to make an interference filter with high refractive index, which also may change the optical wavelength enough to adjust the filter into both correlation and anti-correlation modes.

### Previous work.

The principle of measuring carbon monoxide with such an interference filter is described in US patent 3,939,348 from 1974. It is also mentioned the possibility for making a thermally modulated filter in a transparent optical material, but silicon or similar is not mentioned.

It is expensive to make a mechanical interferometer, and therefore this measuring method has been unsuitable for cheap, mass produced CO sensors for use e.g. in fire alarms for the home market and process monitoring of incinerators.

Around 1990 Michael Zochbauer did some experiments with heating of a silicon disc for changing the optical wavelength [Zochbauer, article]. This way the interference filter becomes a cheap component. The heating and cooling cycle turned out to be slow and energy consuming. Also, it was difficult to achieve a uniform temperature over the disc.

Thus it is an object of this invention to provide an adjustable interference filter with maximum light throughput which also makes it possible to perform correlation and anti correlation measurements under as similar situations as possible, e.g. by fast switching between two interference conditions.

These objects are obtained using an adjustable filter according to the accompanying claims.

The invention will be described in more detail below with reference to the accompanying drawings which illustrates the invention by way of examples.
- Figure 1: illustrates as mentioned above the transmission spectrum for CO, and for a Fabry-Perot filter.
- Figure 2: illustrates as mentioned above a usual assembly for performing gas measurements according to the known art.
- Figures 3A-D: illustrate alternative embodiments of the present invention, as well as the optical equivalent of this embodiment.
- Figure 4: illustrates a micromechanical embodiment of the invention.
- Figures 5A-B: illustrate an alternative embodiment of the invention.
- Figur 6: illustrates an embodiment of the invention having a focusing pattern on a surface.

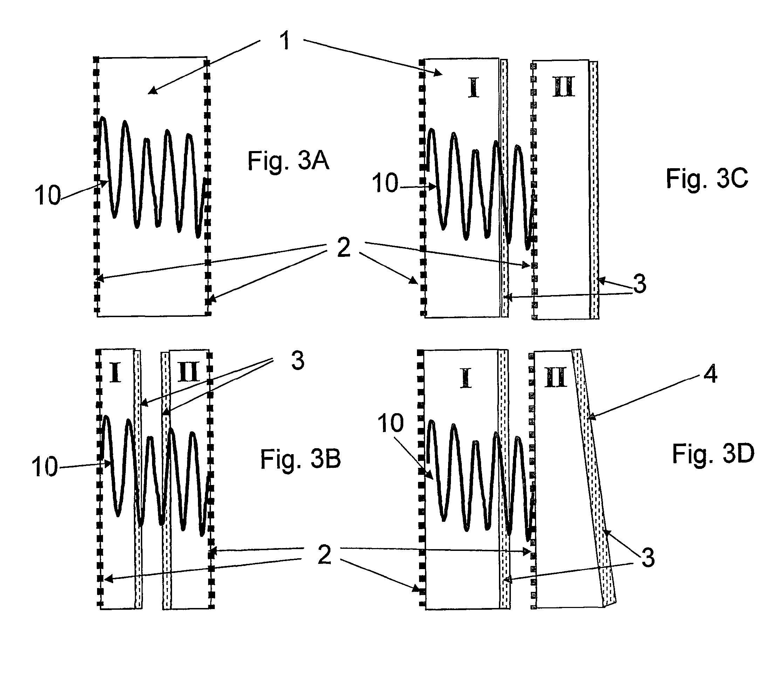

In figures 3B and 3C an interference filter is illustrated consisting of two silicon discs I,II. The dominating interference of the light 10 oscillating in the filter is between the two transitions 2 between silicon and air. On the other side of the discs an anti reflection layer 3 is positioned. The result of this is that the interference filter will act like a single silicon disc 1, except for an "invisible" cavity, so that the optical equivalent situation becomes like the one illustrated in figure 3A, in which the interference filter is illustrated as a silicon disc 1 with a reflecting surface 2 on both sides. By changing the cavity, meaning the distance between the discs I,II in figure 3B, the total optical path length between the reflecting surfaces providing the interference will change. Then the filter may be set in both correlation and anti-correlation modes, so that one achieves the flexibility of an interferometer using cavity and mirrors, at the same time as the advantages of the silicon material are maintained, i.e. high angles of incident and reduced total thickness. The reduced thickness and short cavity distance makes it generally easy to make parallel surfaces. As is evident from the drawings the difference between figures 3B and 3C is only that one silicon disc is turned, only affecting the optical path length between the two reflecting surfaces.

The cavity only has to be large enough to enable practical adjustment in the range of λ/4 to λ/2, depending on the tolerance and stability of the actual embodiment.

The material used is preferably silicon, but it is also possible to achieve good results with other materials. One example is Germanium, which has an even higher refractive index than silicon. In an alternative embodiment the variable cavity may be filled, e.g. with a gel having a suitable refractive index, in order to increase the efficiency of the filter even more. In ordinary uses it will, however, contain air.

The reflective layer will usually consist of plane and essentially parallel surfaces between air and the material, which for silicon will give a reflectance of about 0.3, but different surface treatments may be contemplated for tuning the finesse of the filter. The anti-reflection layer or reflection reducing surface may consist of one or more layers of different refractive indices. This is per se known technology and will not be described in any detail here, but may be provided as a 0.65 µm layer of SiO with operation at wavelengths in the range of 4.75 µm. Other techniques such as porous silicon or gradual transitions in refractive index may also be used. The most important is that is has minimal reflection coefficient for the wavelength range of interest. The remaining reflection coefficient will affect the two measurements differently. Interference from one layer may be reduces even more by making one surface 4 rough or inclined, as illustrated in figure 3D.

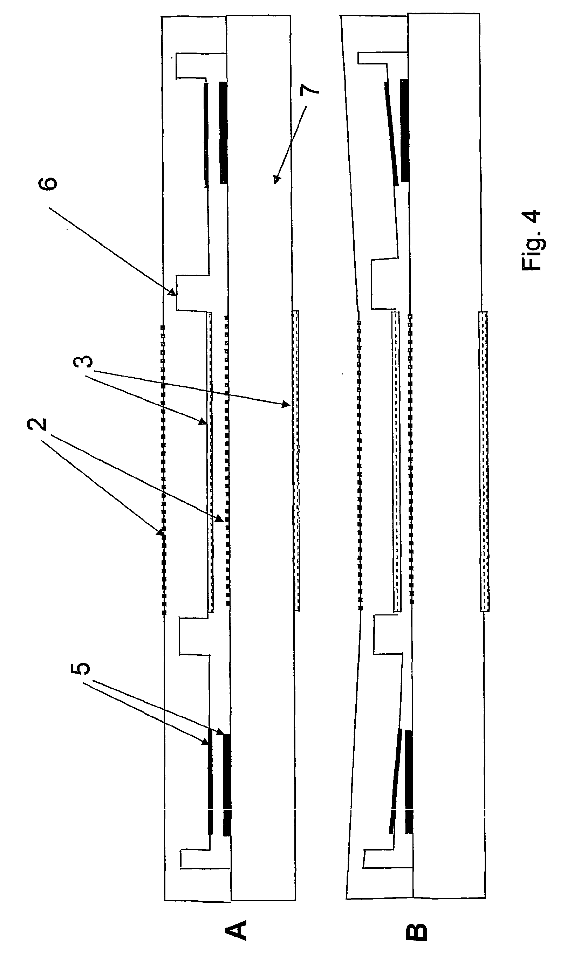

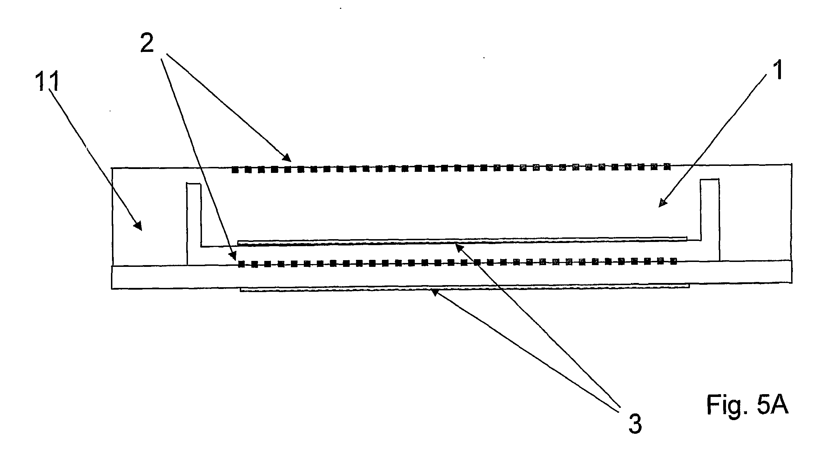

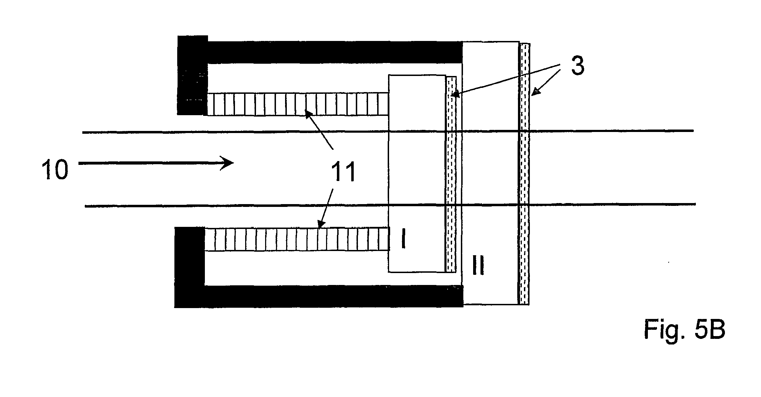

Figures 4 and 5 illustrates how the filter is thought to be implemented based on per se known solutions for wafer bonding and micromachining. As is evident from figure 4 the filter here is constituted by a substrate 6 with a disc being held at a chosen distance over the substrate. By applying an electrical voltage between the silicon disc 6, which constitutes one of the reflectors and the transparent material in the filter, and the underlying substrate 7 with the second reflector, one may adjust the distance between them with electrostatic attraction. Thus the thickness of the cavity is changes in a simple way. In figure 4 the dimensions in the different directions are, for the purpose of illustration, out of proportions for a practically realizable embodiment.

Figure 4 illustrates a section of a preferred embodiment of the invention comprising an adjustable Fabry-Perot filter with electrostatic movement of the elements using the electrodes 5 coupled to a suitable voltage source (not shown). With electrostatic attraction between the overlying disc 6 and the substrate 7 the disc is pulled down and the cavity between them becomes smaller. This may be realized by photolithographic mass production based on wafer bonding and polishing.

Figures 5A and 5B illustrates an alternative principle wherein the thickness of the cavity is adjusted using a piezoelectric actuator 11. As evident from figure 5B the light 10 passes through the Fabry-Perot, so that the light falls in from one side and the light transmission may be measured on the other side of the filter. Both the disc and the substrate may be provided with a reflecting surface and a reflex reducing layer on the other side. The order of these may be varied as long as the cavity as well as at least one disk of silicon is found between the reflecting layers. These considerations may of course also be done in relation to the solution illustrated in figure 4. In addition to these solutions the distance between the reflecting layers may of course also be adjusted by choosing temperature, as described in the known art, possible for coarse adjustment to the measuring range of interest. Thus the resulting means for adjusting the optical path length through the filter will comprise a combination of temperature and distance control.

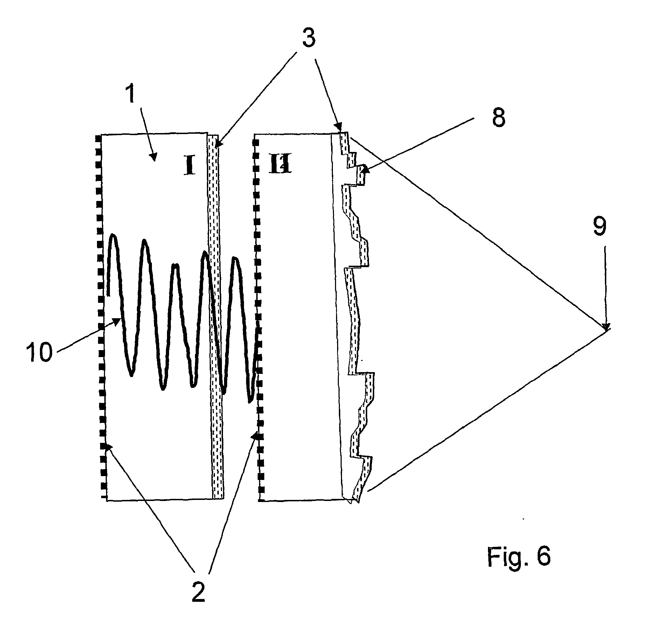

In addition to the solutions shown here the silicon disc may be provided with a pattern, e.g. for focusing the light passing through the element. This may be diffractive patterns, Fresnel lenses or zone plates 8 as illustrated in figure 6 where the light also passes through the filter and is focused toward a point. This may replace the other filter types in the optical system illustrated in figure 2, and may thus reduce the complexity of and requirements for adjustment between the different components.

According to another embodiment of the invention the silicon disc, in addition or as an alternative, may be provided with a larger pattern of reflecting surfaces for providing different cavity distances in different positions on the disc. In this way the different parts of the light spectrum may be analyzed in different positions on the disc, and possible diffractive lenses may aim the light in different directions for separate analysis. This will give a possibility for parallel analysis of different ranges of wavelengths in the light, and is treated more specifically in the simultaneously filed Norwegian patent application No 2005.1850, and the international application publication WO 2006/110041 A1, filed with priority from said application.

### References

1. Barrett JJ. 1974. U.S. Patent No. 3,939,348
2. Rabbett MD. 1997. U.S. Patent No. 5, 886, 247
3. Zochbauer M. 1994. Technisches Messen 61: 195-203,

## Claims

1. Adjustable interference filter for use in gas detection with infrared light within a chosen range of wavelengths, comprising a defined light path and at least two essentially parallel reflective surfaces positioned in said light path and separated by a chosen distance defining a resonator delimited by the reflective surfaces between which the light may oscillate, and at least one of said surfaces being semitransparent for transmission of light to or from the resonator, the filter comprising:
a first transparent material with a chosen thickness and having a chosen refractive index comparable to silicon or higher positioned between said reflective surfaces in said light path,
separation means for defining a cavity between the first transparent material and at least one of the reflecting surfaces, and adjustment means device for adjusting the distance between said reflective surfaces and thus adjusting the resonators optical path length, and
an interface surface between said transparent material and said cavity in said light path comprising reflection reducing means for reducing reflectivity of said interface surface in said range of wavelengths.

2. Filter according to claim 1, wherein the first reflecting surface constitutes one side of said transparent material, and said interface surface having reduced reflectivity being positioned on the opposite side of this, and the second reflecting surface is positioned on a carrier material on the opposite side of said cavity.

3. Filter according to claim 2, wherein said first transparent material is constituted by a disc positioned over said second reflecting surface, so that the first reflecting surface is on the upper side of the disc and the reflex reducing layer(s) is positioned on the lower side of the disc.

4. Filter according to claim 3, comprising coupling means for coupling to a voltage source and electrical conductors related to each of the two reflecting surfaces, thus to provide electrostatic adjustment of the distance between them.

5. Filter according to claim 1, wherein at least one of said reflecting surfaces comprise a three dimensional pattern, said pattern constituting a diffractive filter e.g. for transmission or reflection of light with different wavelengths in different directions.

6. Filter according to claim 5, wherein said pattern constitutes at least one diffractive lens adapted to focus light with different wavelengths toward different points.

7. Filter according to claim 1, wherein said cavity is filled with a flexible material, e.g. a gel having a chosen refractive index.

8. Filter according to claim 1, wherein said interface with reduced reflectivity comprises at least one layer of materials having a refractive index being different from the refractive index of the cavity and of the transparent material, and with a thickness which in a per se known way reduces reflections at said interface within the chosen range of wavelengths.

9. Filter according to claim 1, wherein the first transparent material is provided with a reflective surface on one side and reflection reducing means on the other side and the filter also comprises a second transparent material having a reflective surface on one side and reflection reducing means on the other side, wherein the two transparent materials are oriented so that the surfaces provided with reflection reducing means are facing each other, being separated by said separation means and the distance between them being adjusted by said adjustment means, the resonator thus including two transparent materials.

10. Filter according to claim 1, wherein the distance between the reflective surfaces, is chosen so as to provide interference within a wavelength range corresponding to a chosen absorption wavelength range characterizing the gas to be detected.

## Patentansprüche

1. Einstellbarer Interferenzfilter zur Verwendung in der Detektion von Gasen mit infrarotem Licht innerhalb eines gewählten Wellenlängenbereichs, umfassend einen definierten Lichtweg und zumindest zwei im Wesentlichen parallele reflektierende Oberflächen, welche sich im Lichtweg befinden und durch einen gewählten Abstand getrennt sind, welcher einen Resonator definiert, welcher durch die reflektierenden Oberflächen begrenzt ist, zwischen denen das Licht oszillieren kann, und wobei zumindest eine der Oberflächen semitransparent für die Transmission von Licht in den oder aus dem Resonator ist, wobei der Filter umfasst:
ein sich zwischen den reflektierenden Oberflächen im Lichtweg befindendes erstes transparentes Material mit einer gewählten Dicke und einem gewählten Brechungsindex, welcher mit Silizium vergleichbar oder höher ist,
Trennmittel zum Definieren eines Hohlraums zwischen dem ersten transparenten Material und zumindest einer der reflektierenden Oberflächen, und eine Einstellmittel zum Einstellen des Abstands zwischen den reflektierenden Oberflächen und folglich zum Einstellen der optischen Weglänge des Resonators, und
eine Grenzfläche zwischen dem transparenten Material und dem Hohlraum im Lichtweg, umfassend Reflexionsverringerungsmittel zum Verringern der Reflektivität der Grenzfläche im Wellenlängenbereich.

2. Filter nach Anspruch 1, wobei die erste reflektierende Oberfläche eine Seite des transparenten Materials bildet, und wobei die Grenzfläche, welche eine verringerte Reflektivität aufweist, sich an der gegenüberliegenden Seite davon befindet, und wobei sich die zweite reflektierende Oberfläche auf einem Trägermaterial an der gegenüberliegenden Seite des Hohlraums befindet.

3. Filter nach Anspruch 2, wobei das erste transparente Material durch eine Scheibe gebildet wird, welche sich über der zweiten reflektierenden Oberfläche befindet, so dass die erste reflektierende Oberfläche auf der Oberseite der Scheibe ist und sich die reflexverringernde(n) Schicht(en) an der Unterseite der Scheibe befinden.

4. Filter nach Anspruch 3, umfassend Verbindungsmittel zum Verbinden mit einer Spannungsquelle und elektrische Leiter in Bezug auf jede der zwei reflektierenden Oberflächen, umso eine elektrostatische Einstellung des Abstands zwischen diesen zur Verfügung zu stellen.

5. Filter nach Anspruch 1, wobei zumindest eine der reflektierenden Oberflächen ein dreidimensionales Muster umfasst, wobei das Muster einen Beugungsfilter bildet, z. B. für die Transmission oder Reflexion von Licht mit verschiedenen Wellenlängen in verschiedene Richtungen.

6. Filter nach Anspruch 5, wobei das Muster zumindest eine Beugungslinse bildet, welche geeignet ist, Licht mit verschiedenen Wellenlängen zu verschiedenen Punkten hin zu fokussieren.

7. Filter nach Anspruch 1, wobei der Hohlraum mit einem flexiblen Material gefüllt ist, z. B. einem Gel, welches einen gewählten Brechungsindex aufweist.

8. Filter nach Anspruch 1, wobei die Grenzfläche mit verringerter Reflektivität zumindest eine Schicht von Materialien umfasst, welche einen Brechungsindex aufweisen, welcher verschieden vom Brechungsindex des Hohlraums und des transparenten Materials ist, und welche eine Dicke aufweisen, welche in einer an sich bekannten Weise Reflexionen an der Grenzfläche innerhalb des gewählten Wellenlängenbereichs verringert.

9. Filter nach Anspruch 1, wobei das erste transparente Material mit einer reflektierenden Oberfläche auf einer Seite und Reflexionsverringerungsmitteln auf der anderen Seite versehen ist, und das Filter ferner ein zweites transparentes Material umfasst, welches eine reflektierende Oberfläche auf einer Seite und Reflexionsverringerungsmittel auf der anderen Seite aufweist, wobei die zwei transparenten Materialien derart orientiert sind, dass die Oberflächen, welche mit Reflexionsverringerungsmitteln ausgestattet sind, einander gegenüberliegen, wobei sie durch die Trennungsmittel getrennt sind, und wobei der Abstand zwischen ihnen durch die Einstellmittel eingestellt wird, so dass der Resonator zwei transparente Materialien enthält.

10. Filter nach Anspruch 1, wobei der Abstand zwischen den reflektierenden Oberflächen derart gewählt ist, um Interferenz innerhalb eines Wellenlängenbereichs vorzusehen, welcher einem das zu detektierende Gas charakterisierenden gewählten Absorptionswellenlängenbereich entspricht.

## Revendications

1. Filtre interférentiel ajustable pour une utilisation dans une détection de gaz avec une lumière infrarouge au sein d'une plage choisie de longueurs d'onde, comprenant un trajet de lumière défini et au moins deux surfaces réflectrices essentiellement parallèles positionnées dans ledit trajet de lumière et séparées par une distance choisie définissant un résonateur délimité par les surfaces réflectrices entre lesquelles la lumière peut osciller, et au moins une desdites surfaces étant semi-transparente pour une transmission de lumière vers le ou en provenance du résonateur, le filtre comprenant :
un premier matériau transparent, avec une épaisseur choisie et ayant un indice de réfraction choisi comparable au silicium ou supérieur, positionné entre lesdites surfaces réflectrices dans ledit trajet de lumière.
des moyens de séparation pour définir une cavité entre le premier matériau transparent et au moins une des surfaces réflectrices, et un dispositif d'ajustement pour ajuster la distance entre lesdites surfaces réflectrices et ajuster ainsi la longueur de trajet optique des résonateurs, et
une surface d'interface entre ledit matériau transparent et ladite cavité dans ledit trajet de lumière comprenant des moyens de réduction de réflexion pour réduire la réflectivité de ladite surface d'interface dans ladite plage de longueurs d'onde.

2. Filtre selon la revendication 1, dans lequel la première surface réflectrice constitue un côté dudit matériau transparent, et ladite surface d'interface possédant une réflectivité réduite est positionnée sur le côté opposé de celle-ci, et la seconde surface réflectrice est positionnée sur un matériau de support sur le côté opposé de ladite cavité.

3. Filtre selon la revendication 2, dans lequel ledit premier matériau transparent est constitué d'un disque positionné sur ladite seconde surface réflectrice, de sorte que la première surface réflectrice soit sur le côté supérieur du disque et la ou les couches de réduction de la réflexion est/sont positionnées sur le côté inférieur du disque.

4. Filtre selon la revendication 3, comprenant des moyens de couplage pour le raccordement à une source de tension et des conducteurs électriques associés à chacune des deux surfaces réflectrices, pour fournir ainsi un ajustement électrostatique de la distance entre eux.

5. Filtre selon la revendication 1, dans lequel au moins une desdites surfaces réflectrices comprend un motif tridimensionnel, ledit motif constituant un filtre diffractif, par exemple pour la transmission ou la réflexion d'une lumière comprenant différentes longueurs d'onde dans différentes positions.

6. Filtre selon la revendication 5, dans lequel ledit motif constitue au moins une lentille diffractive adaptée pour concentrer une lumière comprenant différentes longueurs d'onde à travers différents points.

7. Filtre selon la revendication 1, dans lequel ladite cavité est remplie avec un matériau flexible, par exemple un gel ayant un indice de réfraction choisi.

8. Filtre selon la revendication 1, dans lequel ladite interface possédant une réflectivité réduite comprend au moins une couche de matériaux dotés d'un indice de réfraction différent de l'indice de réfraction de la cavité et du matériau transparent, et ayant une épaisseur qui, d'une manière connue en elle-même réduit les réflexions au niveau de ladite interface au sein de la plage de longueurs d'onde choisie.

9. Filtre selon la revendication 1, dans lequel le premier matériau transparent est muni d'une surface réflectrice sur un côté et de moyens de réduction de réflexion sur l'autre côté et le filtre comprend également un second matériau transparent ayant une surface réflectrice sur un côté et des moyens de réduction de réflexion sur l'autre côté, dans lequel les deux matériaux transparents sont orientés de sorte que les surfaces munies des moyens de réduction de réflexion se font face mutuellement, en étant séparées par lesdits moyens de séparation et la distance entre elles étant ajustée par lesdits moyens d'ajustement, le résonateur comprenant ainsi deux matériaux transparents.

10. Filtre selon la revendication 1, dans lequel la distance entre les surfaces réflectrices est choisie de manière à produire une interférence au sein d'une plage de longueurs d'onde correspondant à une plage de longueurs d'onde d'absorption choisie caractérisant le gaz devant être détecté.
